Europäisches Patentamt

European Patent Office

Office européen des brevets

(11) Publication number: **0 420 249 A2**

# EUROPEAN PATENT APPLICATION

(21) Application number: 90118583.5

(22) Date of filing: 27.09.90

(51) Int. Cl.⁵: **G11B 7/125**, G11B 7/00

(30) Priority: 29.09.89 JP 254886/89

(43) Date of publication of application:
03.04.91 Bulletin 91/14

(84) Designated Contracting States:
DE FR GB NL

(71) Applicant: **KABUSHIKI KAISHA TOSHIBA**
**72, Horikawa-cho Saiwai-ku**
**Kawasaki-shi Kanagawa-ken 210(JP)**

(72) Inventor: **Yoshida, Takaharu, c/o Intellectual**
**Property Div.**
**Kabushiki Kaisha Toshiba, 1-1, Shibaura**
**1-chome**
**Minato-ku, Tokyo 105(JP)**

(74) Representative: **Henkel, Feiler, Hänzel &**
**Partner**
**Möhlstrasse 37**
**W-8000 München 80(DE)**

(54) Optical disk apparatus having stabilizing function for outputting laser beam.

(57) When a header on an optical disk (1) is detected by a header detector (30), a switch (51) is turned on by an output from the header detector (30), and an output from a laser beam detector (8b) is held in an integrator (54). The output level of the integrator (54) is compared with a reference value defined by a resistor (58) by a comparator (55). A transistor (57) is driven by an error output obtained by the comparison, thus driving a semiconductor laser unit (9).

F I G. 2

# OPTICAL DISK APPARATUS HAVING STABILIZING FUNCTION FOR OUTPUTTING LASER BEAM

The present invention relates to an optical disk apparatus for recording/reading information in/from an optical disk by using a laser beam emitted from a laser unit.

As is well known, various types of optical disk apparatuses have been developed. These apparatuses are designed to record information in optical disks and to read information recorded in optical disks by using laser beams emitted from laser units such as semiconductor laser oscillators.

In the above-mentioned optical disk apparatuses, information is read (reproduced) by using a laser beam of a small light amount (low intensity), whereas recording of information is performed by using an intermittent laser beam of a large light amount (high intensity). The light amount of a laser beam is changed by changing a voltage to be applied to the semiconductor laser oscillator by using a transistor or the like.

Such an optical disk apparatus includes a stabilizing circuit for keeping the output light amount of a laser beam emitted from the semiconductor laser oscillator to be constant by monitoring a monitor light amount from the semiconductor laser oscillator during a reproducing operation. If this stabilizing circuit is kept ON, a problem is posed in terms of power saving. For this reason, it is considered that the stabilizing is kept OFF during a recording operation. In this case, for example, a decrease in output from the stabilizing circuit may be prevented by means of an integrator for a period of time corresponding to the time constant thereof.

If, however, recording of information is performed for a long period of time, and the recording time exceeds the period of time corresponding to the time constant of the integrator, the output of the stabilizing circuit is decreased upon switching to the reproduction mode. For this reason, a reproducing laser beam cannot be stably generated by the semiconductor laser oscillator.

The present invention has been made to eliminate the drawback that a reproducing laser beam cannot be stably generated by a semiconductor laser oscillator when recording of information is performed for a long period of time longer than a time constant of an integrator, and has as its object to provide a disk apparatus which allows a semiconductor laser oscillator to stably generate a reproducing laser beam even when recording of information is performed for a long period of time, and can realize power saving.

According to the present invention, there is provided an optical disk apparatus for recording/reproducing information in/from an optical disk having prerecorded headers by using a laser beam emitted from a semiconductor laser oscillator, comprising detecting means for detecting an oscillation output from the semiconductor laser oscillator, switching means, switched depending on whether the laser beam is positioned at a header of the disk in recording of information, for outputting a detection result obtained by the detecting means when the laser beam is positioned at the header of the disk, holding means for holding an output value from the switching means for a predetermined period of time, output means for outputting a difference between the output value held by the holding means and a reference value, and driving means for driving the semiconductor laser oscillator by using a current corresponding to the difference output from the output means.

According to the present invention, in the optical disk apparatus for recording/reproducing information in/from an optical disk having prerecorded headers by using a laser beam emitted from the semiconductor laser oscillator, an oscillation output from the semiconductor laser is detected by the detecting means. When information is to be recorded, the laser beam output level is switched to a corresponding level depending on whether the laser beam is positioned at a header of the optical disk. When the laser beam is positioned at the header of the optical disk, a detection result is output from the detecting means and is held for a predetermined period of time. A difference between the value of the output detection result and the reference value is then output. The semiconductor laser oscillator is driven by a current corresponding to the output difference.

This invention can be more fully understood from the following detailed description when taken in conjunction with the accompanying drawings, in which:

Fig. 1 is a block diagram showing a circuit arrangement of an embodiment of the present invention;

Fig. 2 is a block diagram showing a main part of the circuit in Fig. 1;

Figs. 3A to 3C are timing charts for explaining an operation of a CPU in Fig. 2; and

Fig. 4 is a flow chart showing an operation of the CPU of Fig. 1.

An embodiment of the present invention will be described below with reference to the accompanying drawings.

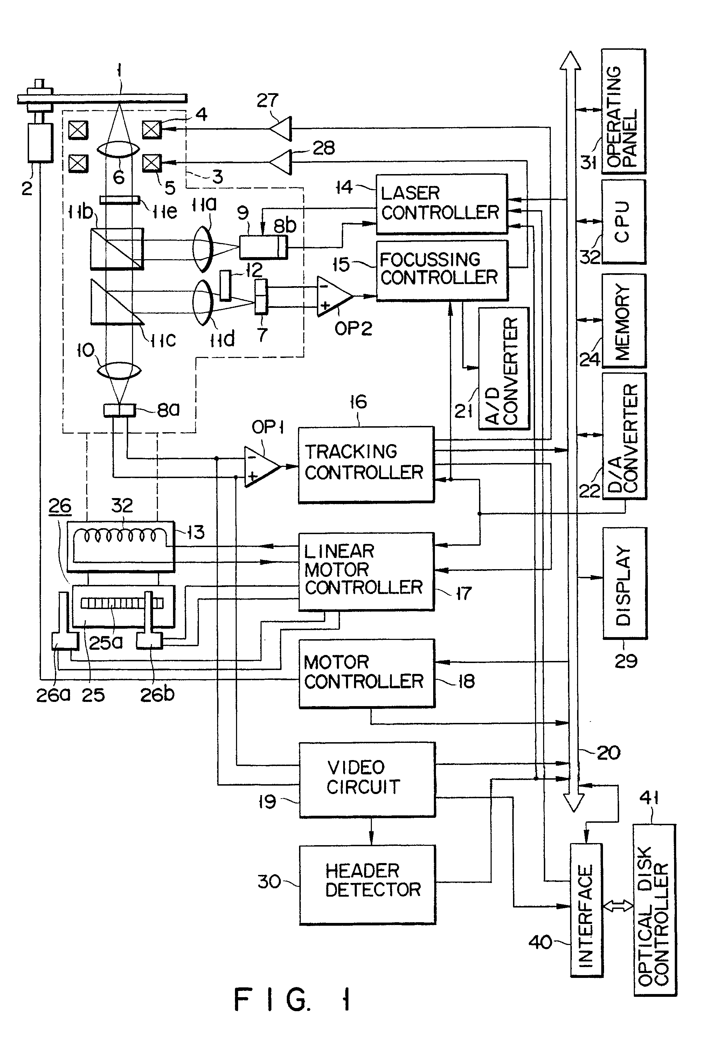

Fig. 1 shows a schematic arrangement of an optical disk apparatus according to an embodiment of the present invention. In this apparatus, an optical disk 1 is rotated by a DC motor 2 at a constant linear velocity with respect to an optical head 3. Recording tracks are spirally formed in a surface of the optical disk 1 by a pregroove method. In addition, a header constituted by block number data or the like is recorded in the optical disk 1 for each block as a record unit. The optical head 3 for recording, reproducing, and erasing information is arranged on the under surface side of the optical disk 1.

This optical head 3 has the following arrangement. Reference numeral 9 denotes a semiconductor laser oscillator used to record and reproduce information. A divergent laser beam is generated by the semiconductor laser oscillator 9. When information is to be written in a recording film (not shown) of the optical disk 1, the oscillator 9 generates a laser beam intensity-modulated with "1" and "0" (having an intermittently changing high intensity) in accordance with digital information to be written. When information is to be read from the recording film, the oscillator 9 generates a laser beam having a constant intensity (low intensity).

The divergent laser beam generated by the semiconductor laser oscillator 9 is collimated by a collimator lens 11a and is guided to a deflection beam splitter 11b. A laser beam L guided to the deflection beam splitter 11b is reflected by the beam splitter 11b and is radiated on an objective lens 6 through a λ/4 plate 11e. The laser beam L is then focused on the recording film of the optical disk 1 by the objective lens 6. The objective lens 6 is supported to be movable in its optical axis direction and in a direction perpendicular thereto (the radial direction of the optical disk 1). When the objective lens 6 is located at a predetermined position, the beam waist of the convergent laser beam L emerging from the objective lens 6 is projected on a surface of the recording film, and the smallest beam spot is formed on the surface of the recording film.

In this state, the objective lens 6 is held in an in-focus state and in an on-track state so that a write/read operation of information can be performed. When information is to be written, pits are formed in a tracking guide on the recording film by an intensity-modulated laser beam of high intensity. When information is to be read, a laser beam having a constant intensity (low intensity) is reflected while it is light-modulated by pits formed in a tracking guide.

The divergent laser beam reflected by the recording film of the optical disk 1 is collimated again by the objective lens 6 at the time of the in-focus state and returns to the deflection beam splitter 11b through the λ/4 plate 11e. Since the laser beam reciprocates through the λ/4 plate 11e, the polarization plane is rotated through 90° in relation to the laser beam reflected by the deflection beam splitter 11b. Therefore, the laser beam is not reflected by the deflection beam splitter 11b but is transmitted through it. The laser beam transmitted through the deflection beam splitter 11b is radiated on a two-split sensor 8a functioning as a first photodetector through a half prism 11c and a focusing lens 10. An electrical signal output from the first photodetector 8a is supplied to a signal processor (to be described below) so as to perform a read operation of the information, focusing and tracking of the laser beam, or the like.

Referring to Fig. 1, the DC motor 2 is controlled by a motor controller 18. The optical head or pickup 3 is fixed to a driving coil 13 constituting the movable portion of a linear motor 32. The driving coil 13 is connected to a linear motor controller 17. The stator portion of the linear motor 32 includes a permanent magnet (not shown). The linear motor 32 is driven by the linear motor controller 17 so as to move the optical pickup 3 in the radial direction of the optical disk 1. A linear motor position detector 26 is connected to the linear motor controller 17. The linear motor position detector 26 is also connected to the optical pickup 3. The detector 26 detects a moving optical scale 25 having a slit 25a and outputs a signal representing the position of the optical pickup 3.

The linear motor position detector 26 is fixed to the base (not shown) of the optical disk apparatus. The detector 26 is constituted by a sensor 26a for detecting that the linear motor 32 is positioned at the innermost peripheral portion as the initial position of the optical disk 1, and a sensor 26b for detecting a moving amount of the linear motor 32.

The objective lens 6 is held in the optical pickup 3 by means of a leaf spring (not shown). The objective lens 6 is designed to be moved in the focusing direction (in the direction of the optical axis of the lens 6) by exciting a driving coil 5 and to be moved in the tracking direction (in the radial direction of the optical disk 1 perpendicular to the optical axis of the lens 6) by driving a driving coil 4. The semiconductor laser 9 is driven by a laser controller 14. A laser beam emitted from the semiconductor laser 9 is radiated on the surface of the optical disk 1 through the collimator lens 11a, the beam splitter 11b, the λ/4 plate 11e, and the objective lens 6. The laser beam reflected by the surface of the optical disk 1 is guided to the half prism 11c through the objective lens 6, the λ/4 plate 11e, and the beam splitter 11b so as to be divided into two components. One of the components divided by the half prism 11c is guided to the two-split sensor 8a through the focusing lens 10. The other component is guided to a two-split sensor 7 through a focusing lens 11d and a knife-edge 12. An output signal from the two-split sensor 8a is supplied to an operational amplifier OP1. The amplifier OP1 then supplies a corresponding output signal, as a track difference signal, to a tracking controller 16. The tracking controller 16 supplies the track difference signal, as a tracking control signal, to the driving coil 4 through an amplifier 27, thus moving the objective lens 6 in the tracking direction. In addition, the tracking control signal is also supplied to the linear motor controller 17.

The two-split sensor 7 outputs a signal relating to the focal position of the laser beam. This output signal is supplied as a focus error signal to a focusing controller 15 through an operational amplifier OP2. The focusing controller 15 then applies a voltage corresponding to the supplied focus error signal to the focusing driving coil 5 through an amplifier 28. With this operation, the laser beam is properly focused at the desired position on the optical disk 1.

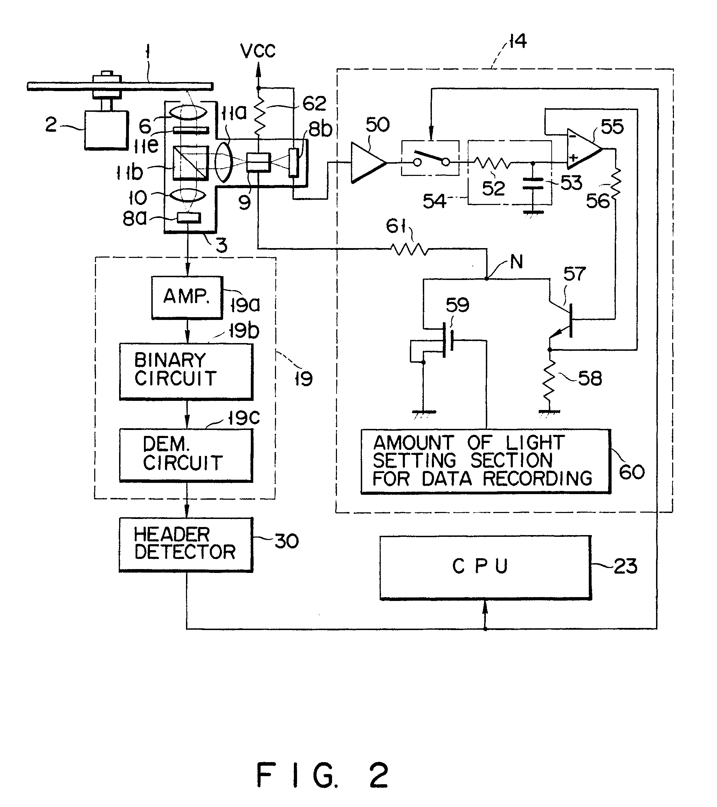

The laser beam reflected by the optical disk 1 in the process of tracking is incident on the two-split sensor 8a through the optical pickup 3 including the objective lens 6. Upon reception of the reflected beam, the two-split sensor 8a generates two electrical output signals. These two signals are supplied as reproducing signals to a video circuit 19 constituted by an amplifier 19a, a binary circuit 19b, and a demodulation circuit 19c as shown in Fig. 2. In this video circuit 19, image information and address information are generated. The generated information can be displayed on a display 29. The laser controller 14, the focusing controller 15, the tracking controller 16, the linear motor controller 17, the motor controller 18, and the video circuit 19 are controlled by a CPU 23 through a bus line 20. The CPU 23 executes a predetermined program stored in a memory 24 in accordance with a command input from an operating panel 31 by an operator. An A/D converter 21 is used to allow communication of information between the focusing controller 15 and the CPU 23. A D/A converter 22 is used to allow communication of information between the tracking servo controller 16, the linear motor controller 17, and the CPU 23.

A video signal generated by the video circuit 19 is output to an optical disk controller 41 as an external unit through an interface 40.

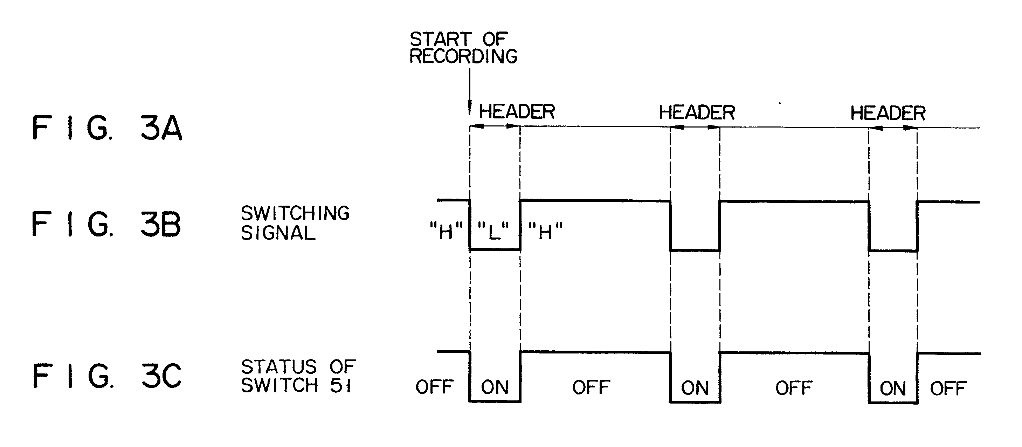

The video signal from the video circuit 19 is further supplied to a header detector 30. As shown in Figs. 3A to 3C, the header detector 30 detects a header leading edge of a header detection signal (Fig. 3A). As will be described later, the header leading edge detection signal is used to switch the output of the laser oscillator 9 between the record and reproduction modes.

The arrangement of the main part of the embodiment shown in Fig. 1 will be described in more detail below with reference to Fig. 2.

Monitor light emitted from the rear portion of the semiconductor laser oscillator 9 is incident on a second photodetector 8b so as to be converted into an electrical signal, i.e., a current corresponding to the light amount emitted from the laser 9. An output from this second photodetector 8b is supplied to an integrator 54 constituted by a resistor 52 and a capacitor 53 through an amplifier 50 and a switch 51 in the laser controller 14. The switch 51 is ON/OFF-controlled in accordance with a switching signal corresponding to a recording timing signal supplied from the header detector 30. For example, as shown in Fig. 3B, when a laser beam is positioned at a header in the recording mode, the switching signal is at "L" level, and hence the switch 51 is ON, as shown in Fig. 3C. In the recording mode, when the laser beam is positioned at a portion other than the header and is positioned at an information recording area, the switching signal is at "H" level, and the switch 51 is OFF.

An output from the integrator 54 is supplied to an error amplifier 55. The error amplifier 55 obtains an error signal by comparing the output from the integrator 54 with a reference voltage defined by a resistor 58, and outputs the error signal as a driving signal to the base of an npn transistor 57 through a resistor 56. The emitter of this transistor 57 is grounded through the resistor 58. The transistor 57 amplifies the current at an amplification factor corresponding to the error signal supplied from the error amplifier 55 through the resistor 56. As a result, different currents flow in the semiconductor laser oscillator 9 depending on a difference between amplification factors of the transistor 57, thus changing the light amount of the semiconductor laser oscillator 9 corresponding to recording and reproducing modes.

In this case, the amplifier 50, the switch 51, the integrator 54, the error amplifier 55, the resistor 56, and the transistor 57 constitute an output stabilizing control circuit for stabilizing the oscillation output of the semiconductor laser oscillator 9.

Reference numeral 60 denotes a recording light amount setting section for outputting a control signal to the gate of an FET (field effect transistor) 59 in accordance with a modulation signal corresponding to recording data in the recording mode so as to ON/OFF-control the FET 59. The source of the FET 59 is grounded. The drain of the FET 59 and the collector of the transistor 57 are commonly connected at node N (in a wired-OR fashion) to a power source (Vcc) through a resistor 61, the semiconductor laser oscillator 9, and a resistor 62.

The CPU 23 serves to control the overall apparatus. In the recording mode, the CPU 23 outputs a modulation signal corresponding to recording data supplied from an external unit (not shown) to the recording light amount setting section 60. At the same time, the CPU 23 generates a recording timing signal corresponding to reading of a header of the optical disk 1 and outputs it to the switch 51.

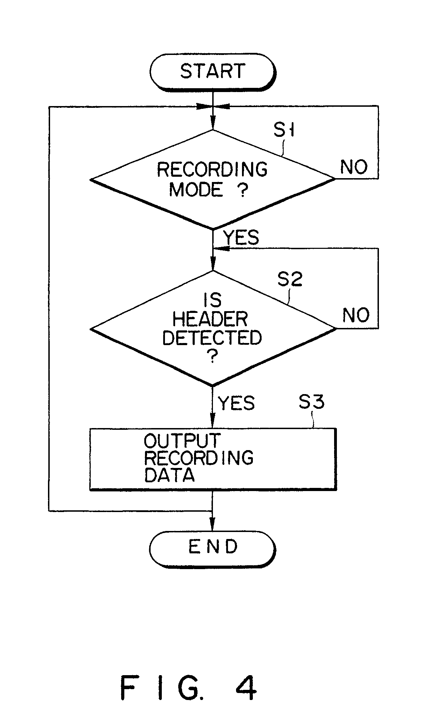

An operation of the apparatus having the above-described arrangement will be described below referring to the flow chart of Fig. 4. Recording of information detected in step S1 of Fig. 4 will be described first. A state of step S2 wherein the optical pickup 3 detects a header will be considered. In this state, since the output of the header detector 30 is set at "L" level, the switch 51 is turned on as in step S3. As a result, a signal corresponding to monitor light emitted from the semiconductor laser oscillator 9 and detected by the second photodetector 8b is amplified by the amplifier 50 and is subsequently output to the integrator 54 through the switch 51. With this operation, a voltage value corresponding to the monitor light is charged in the capacitor 53 of the integrator 54. A difference between the voltage value corresponding to the monitor light and accumulated in the capacitor 53 and the reference voltage is obtained by the error amplifier 55. The obtained error signal is then supplied to the base of the transistor 57. The transistor 57 performs current amplification at an amplification factor corresponding to the error signal. As a result, a high-level current flows in the semiconductor laser oscillator 9 at first. With an increase in light amount emitted from the laser oscillator 9, the current level is gradually decreased. When a voltage value corresponding to the light amount of the semiconductor oscillator 9 coincides with a reference voltage (for reproduction), a predetermined current level is obtained, and a low-intensity laser beam is continuously generated by the semiconductor laser oscillator 9.

The CPU 23 outputs a modulation signal corresponding to recording data supplied from an external unit such as the optical disk controller 41 to the recording light amount setting section 60. The recording light amount setting section 60 outputs a control signal corresponding to the modulation signal to the gate of the FET 59. With this operation, the FET 59 is intermittently turned on and off in accordance with the supplied control signal. When the header is detected at the start of a recording operation with respect to this one block, an "L"-level switching signal is output from the header detector 30 to turn on the switch 51. Then no header is detected, the output from the second photodetector 8b is disconnected, and a voltage value corresponding to monitor light before the disconnection is held in the capacitor 53 while data is recorded.

Consequently, a high-level current intermittently flows in the semiconductor laser oscillator 9, and a high-intensity laser beam is intermittently generated by the semiconductor laser oscillator 9. As a result, the semiconductor laser oscillator 9 generates the highintensity laser beam (recording laser beam) and the lowintensity laser beam (reproducing laser beam). This laser beam is collimated by the collimator lens 11a and is guided to the deflection beam splitter 11b. The laser beam guided to the deflection beam splitter 16 is reflected and radiated onto the objective lens 6 through the λ/4 plate 11e. The laser beam is then focused on the optical disk 1 by the objective lens 6. When data is to be recorded, pits are formed in a track on the optical disk 1 upon radiation of the high-intensity laser beam (recording laser beam).

When recording corresponding to the one block is completed, and the optical pickup 3 is positioned to correspond to the header of the next block for which recording is continuously performed, the header detector 30 again outputs an "L"-level switching signal to turn on the switch 51. As a result, a signal corresponding to monitor light emitted from the semiconductor laser oscillator 9 and detected by the second photodetector 8b is amplified by the amplifier 50. The signal is then output to the integrator 54 through the switch 51 and is charged in the capacitor 53. Subsequently, the same operation as described above is performed.

When a mode other than the above-described recording mode is set, or the optical pickup 3 is not positioned at a header, a small current is supplied to the semiconductor laser oscillator 9. That is, a low-intensity laser beam (reproducing beam) is generated by the semiconductor laser oscillator 9 unless a recording beam is generated. Similar to the recording beam, this reproducing laser beam is radiated on the optical disk 1. The reproducing laser beam reflected by the optical disk 1 is collimated by the objective lens 6 and is guided to the deflection beam splitter 11b through the λ/4 plate 11e. At this time, since the laser beam guided to the deflection beam splitter 11b has reciprocated through the λ/4 plate 11e, the polarization plane is rotated through 90° with respect to the laser beam reflected by the deflection beam splitter 11b. Therefore, the laser beam is not reflected by the deflection beam splitter 11b but is transmitted therethrough. A laser beam L transmitted through the deflection beam splitter 11b is radiated on the first photodetector 8a through the focusing lens 10. As a result, a signal corresponding to the radiated laser beam is output from the photodetector 8a as a reproducing signal. Focusing, tracking, and the like are performed by this reproducing signal.

Reproduction of information will be described next. The CPU 23 outputs an "L"-level switching signal to the switch 51 to turn it on. As a result, a signal corresponding to monitor light emitted from the semiconductor laser oscillator 9 and detected by the second photodetector 8b is amplified by the amplifier 50 and is subsequently output to the integrator 54 through the switch 51. Therefore, a voltage value corresponding to the monitor light is charged in the capacitor 53 of the integrator 54. A difference between the voltage value corresponding to the monitor light, which is accumulated in the capacitor 53, and the reference voltage from the resistor 58 is obtained by the error amplifier 55. The obtained error signal is supplied to the base of the transistor 57. The transistor 57 performs current amplification at an amplification factor corresponding to the error signal. As a result, a large current flows in the semiconductor laser oscillator 9 at first. With an increase in light amount, the current level is gradually decreased. When a voltage value corresponding to the light amount of the semiconductor laser oscillator 9 coincides with the reference voltage (for reproduction), a constant current level is obtained, and a constant, low-intensity laser beam is continuously generated by the semiconductor laser oscillator 9. With this operation, the apparatus is operated in the same manner as in the above-described case wherein the recording laser beam is generated in the recording mode, so that a read (reproduction) operation of data, focusing, tracking, or the like is performed by an output from the first photodetector 8a.

As described above, when the optical pickup 3 is positioned to correspond to a header in the recording mode, a detection signal corresponding to monitor light is guided to the integrator 54. Therefore, even if recording of information is performed for a long period of time, i.e., over several blocks, a reproducing laser beam can be stably output from the semiconductor laser oscillator 9.

In the above-described embodiment, the FET 59 is used as a switching element for recording. However, such a switching element as an npn transistor may be used.

As has been described above, according to the present invention, even if recording of information is performed for a long period of time, a reproducing laser beam can be stably output from the semiconductor laser oscillator. In addition, a power-saving optical disk apparatus can be provided.

## Claims

1. An optical disk apparatus for recording/reproducing information in/from an optical disk (1) having prerecorded headers by using a laser beam emitted from a semiconductor laser oscillator (9), characterized by comprising:
means (8b, 50) for detecting an oscillation output from said semiconductor laser oscillator (9);
means (51), switched depending on whether the laser beam is positioned at a header of the disk (1), for outputting a detection result obtained by said detecting means (8b, 50) when the laser beam is positioned at the header of the disk (1);
means (54) for holding an output value from said switching means (51) for a predetermined period of time;
means (55) for outputting a difference between the output value held by said holding means (54) and a reference value; and
means (57) for driving said semiconductor laser oscillator (9) by using a current corresponding to the difference output from said output means (55).

2. An optical disk apparatus for recording/reproducing information by radiating a laser beam on an optical disk (1) having prerecorded headers, characterized by comprising:
laser beam generating means (9) for generating a laser beam;
means (13) for obtaining a reflected laser beam by guiding the laser beam to the optical disk (1);
means (8b, 50) for detecting the laser beam from said laser beam generating means (9) and outputting a detection signal;
means (8a, 19) for forming a disk output signal including a header read signal corresponding to the reflected laser beam;
means (30) for detecting the header read signal from the disk output signal;
switching means (51) for outputting the detection signal in accordance with the header read signal;
means (54) for holding the detection signal output from said switching means (51) for a predetermined period of time;
means (55) for outputting an error signal based on a difference between a reference value output from a reference value output means (58) and the detection signal held by said holding means (54); and
first driving means (57) for driving said laser beam generating means (9) by using a current corresponding to the error signal.

3. An apparatus according to claim 2, characterized in that said switching means (51) includes a switch (51) which is turned on in accordance with the header read signal, and said holding means (54) includes an integrator (54) to which the detection signal is supplied when said switch (51) is turned on.

4. An apparatus according to claim 2, characterized by further comprising:
second driving means (59) for driving said laser beam generating means (9) by using a current corresponding to record information upon detection of the header read signal; and
means (N, 61) for performing wired-OR connection of outputs from said first and second driving means (57, 59) and coupling the outputs to said laser beam generating means (9).

.

F I G. 1

F I G. 2

F I G. 3A

F I G. 3B    SWITCHING
             SIGNAL

F I G. 3C    STATUS OF
             SWITCH 51

START OF
RECORDING

HEADER          HEADER          HEADER

"H" "L" "H"

OFF | ON |    OFF    | ON |    OFF    | ON | OFF

EP 0 420 249 A2

START

S1

RECORDING MODE ?  → NO

YES

S2

IS HEADER DETECTED ? → NO

YES  S3

OUTPUT RECORDING DATA

END

F I G. 4